(19)

**Europäisches Patentamt**
**European Patent Office**
**Office européen des brevets**

(11) **EP 4 128 904 B1**

(12) **EUROPEAN PATENT SPECIFICATION**

(45) Date of publication and mention
of the grant of the patent:
**01.07.2026 Bulletin 2026/27**

(21) Application number: **20714192.0**

(22) Date of filing: **24.03.2020**

(51) International Patent Classification (IPC):
*H04W 52/38* (2009.01)      *H04W 52/28* (2009.01)
*H04W 52/48* (2009.01)

(52) Cooperative Patent Classification (CPC):
**H04W 52/383; H04W 52/28; H04W 52/48;**
H04W 52/282; H04W 52/283

(86) International application number:
**PCT/EP2020/058174**

(87) International publication number:
**WO 2021/190731 (30.09.2021 Gazette 2021/39)**

(54) **CONTEXT-TRIGGERED POWER CONTROL OF A SIDELINK**

KONTEXTGETRIGGERTE LEISTUNGSSTEUERUNG EINES SIDELINK

COMMANDE DE PUISSANCE DÉCLENCHÉE PAR LE CONTEXTE D'UNE LIAISON LATÉRALE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**08.02.2023 Bulletin 2023/06**

(73) Proprietor: **Telefonaktiebolaget LM ERICSSON
(PUBL)
16483 Stockholm (SE)**

(72) Inventors:
• **ÖKVIST, Peter
97341 Luleå (SE)**
• **THURFJELL, Magnus
97251 Luleå (SE)**
• **SANDBERG, Sara
97341 Luleå (SE)**
• **WÄNSTEDT, Stefan
97251 Luleå (SE)**

(74) Representative: **Ericsson
Patent Development
Torshamnsgatan 21-23
164 80 Stockholm (SE)**

(56) References cited:
**EP-A1- 3 349 517**

• **VIVO: "Support of unicast, groupcast and
broadcast", vol. RAN WG1, no. Chengdu, China;
20181008 - 20181012, 29 September 2018
(2018-09-29), XP051517797, Retrieved from the
Internet <URL:http://www.3gpp.org/ftp/tsg%
5Fran/WG1%5FRL1/TSGR1%5F94b/Docs/R1%
2D1810388%2Ezip> [retrieved on 20180929]**
• **AT&T: "Physical layer procedures for sidelink",
vol. RAN WG1, no. Reno, USA; 20191118 -
20191122, 8 November 2019 (2019-11-08),
XP051823640, Retrieved from the Internet
<URL:https://ftp.3gpp.org/tsg_ran/WG1_RL1/
TSGR1_99/Docs/R1-1912842.zip R1-1912842
Physical layer procedures for sidelink.docx>
[retrieved on 20191108]**
• **"3 rd Generation Partnership Project; Technical
Specification Group Radio Access Network;
Evolved Universal Terrestrial Radio Access (E-
UTRA); Physical layer procedures (Release 16)",
no. 20191201, 12 January 2020 (2020-01-12),
XP051843302, Retrieved from the Internet
<URL:https://ftp.3gpp.org/tsg_ran/WG1_RL1/
DRAFT/Draft_versions/Draft36213-g00.zip
36213-g00_s14-xx.docx> [retrieved on 20200112]**

**(Cont. next page)**

- "3rd Generation Partnership Project; Technical Specification Group Services and System Aspects; Enhancement of 3GPP support for V2X scenarios; Stage 1 (Release 16)", 3GPP STANDARD; TECHNICAL SPECIFICATION; 3GPP TS 22.186, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG1, no. V16.2.0, 14 June 2019 (2019-06-14), pages 1 - 18, XP051754106

**Description**

**TECHNICAL FIELD**

Embodiments presented herein relate to a method for a User Equipment (UE) and the User Equipment (UE) for context-triggered power control of a sidelink between the first UE and a second UE.

**BACKGROUND**

In communications networks, there may be a challenge to obtain good performance and capacity for a given communications protocol, its parameters and the physical environment in which the communications network is deployed.

For example, sidelink communication enables two or more nearby devices, such as two UEs, to communicate with each other without the need of a radio access network node, such as a base station. Sidelink communication can be used for the out-of-network coverage scenario but also for scenarios where both devices are within network coverage. The functionality can thus also be used in conjunction with conventional cellular network connections.

One aspect of sidelink communication concerns which sidelink transmission mode the devices involved in the sidelink communication should use. For example, depending on the selected sidelink transmission mode and depending on the transmit power control (TPC) command as sent from the radio access network node in downlink control information 5 (DCI5), the UE is ordered to comply with different ways of power control. For example, given that the TPC command is set to "0", power control is basically removed, and the UE is ordered to operate on maximum transmission power. Maximum allowed power for the control channel of the sidelink and maximum allowed power for the data channel of the sidelink are either cell specific or preconfigured. For example, given that the TPC command is set to "1", the UE is ordered to adjust its sidelink transmission power in relation to the pathloss of the access link between the UE and the radio access network node. Such power control schemes are in details further described in 3GPP TS 36.213 V15.7.0; in section 14.1.1.5 considering "UE procedure for PSSCH power control" and in section 14.2.1.3 for "UE procedure for PSCCH power control".

In general terms, the sidelink transmission power, $P_{SL}$, might be expressed as:

$$P_{SL} = \min\{P_{MAX}, \log_{10}(M) + P_O + \alpha \cdot PL_{SL}\},$$

where $P_{MAX}$ denotes a maximum power level value for transmission over the sidelink 160, M denotes the bandwidth of the resource assignment expressed in number of resource blocks, where the values of $P_O$ and $\alpha$ are provided by higher layer parameters that are associated with the corresponding resource configuration, and where $PL_{SL}$ denotes the sidelink pathloss value. However, in some scenarios this expression does not correctly reflect the needed sidelink transmission power.

There are known documents related to sidelink transmission, namely EP3349517A1 and VIVO: "Support of unicast, groupcast and broadcast", 3GPP DRAFT; R1-1810388. However, devices and operations as in the invention now to be described are neither disclosed nor suggested in these documents.

Hence, there is still a need for an improved control of the sidelink transmission power.

**SUMMARY**

An object of embodiments herein is to provide efficient control of the sidelink transmission power.

According to a first aspect there is presented a method for context-triggered power control of a sidelink between a first UE and a second UE as defined in claim 1. The method is performed by the first UE. The method comprises controlling transmission power of the sidelink depending on transmission context in which transmission on the sidelink is triggered. In the absence of response to transmission of a message on the sidelink within a predetermined time period, the method further comprises retransmitting the message on the sidelink whilst applying a transmission power ramping scheme, wherein, according to the transmission power ramping scheme, transmission power for retransmitting the message is controlled to be increased from retransmission to retransmission of the message.

According to a second aspect there is presented a UE for context-triggered power control of a sidelink between the UE and a second UE as defined in claim 13. The UE comprises processing circuitry and a storage medium, the storage medium containing instructions executable by the processing circuitry such that the UE is operative to control transmission power of the sidelink depending on transmission context in which transmission on the sidelink is triggered. In the absence of response to transmission of a message on the sidelink within a predetermined time period, the method further comprises retransmitting the message on the sidelink whilst applying a transmission power ramping scheme, wherein, according to the transmission power ramping scheme, transmission power for retransmitting the message is controlled to be increased from retransmission to retransmission of the message.

Advantageously, these aspects provide efficient control of the sidelink transmission power.

Advantageously, by controlling the transmission power of the sidelink according to these aspects, the amount of interference generated by the sidelink transmission can be reduced.

Advantageously, with reduced amount of interference, the frequency spectrum can be used more efficiently, for example through simultaneous usage of the same frequency bands for sidelink transmissions in different geographical areas within one cell.

Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, module, action, etc." are to be interpreted openly as referring to at least one instance of the element, apparatus, component, means, module, action, etc., unless explicitly stated otherwise. The actions of any method disclosed herein do not have to be performed in the exact order disclosed, unless explicitly stated.

## BRIEF DESCRIPTION OF THE DRAWINGS

The inventive concept is now described, by way of example, with reference to the accompanying drawings, in which:

Fig. 1 is a schematic diagram illustrating a communication network according to embodiments;

Fig. 2 is a flowchart of methods according to embodiments;

Fig. 3 schematically illustrates transmission power ramping schemes according to embodiments;

Fig. 4 is a schematic diagram showing functional units of a UE according to an embodiment;

Fig. 5 is a schematic diagram showing functional modules of a UE according to an embodiment;

Fig. 6 shows one example of a computer program product comprising computer readable storage medium according to an embodiment;

Fig. 7 is a schematic diagram illustrating a telecommunication network connected via an intermediate network to a host computer in accordance with some embodiments; and

Fig. 8 is a schematic diagram illustrating host computer communicating via a radio base station with a terminal device over a partially wireless connection in accordance with some embodiments.

## DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description. Any action or feature illustrated by dashed lines should be regarded as optional.

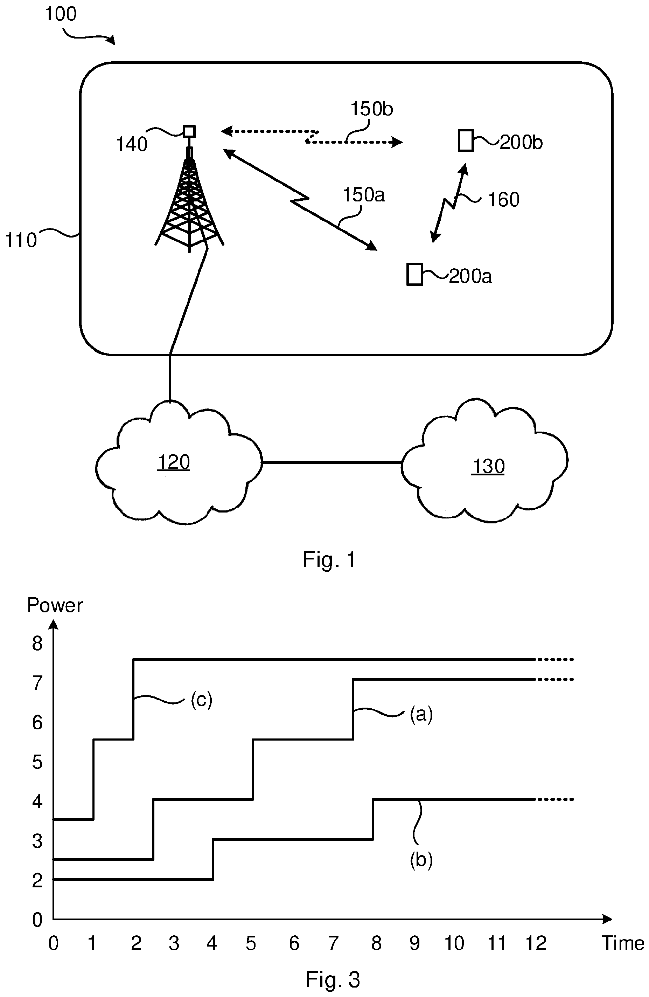

**Fig. 1** is a schematic diagram illustrating a communication network 100a where embodiments presented herein can be applied. The communication network 100a could be a third generation (3G) telecommunications network, a fourth generation (4G) telecommunications network, a fifth generation (5G) telecommunications network, or any advancement thereof, and support any 3GPP telecommunications standard, where applicable.

The communication network 100a comprises a radio access network node 140 configured to provide network access to UEs 200a, 200b in a radio access network 110. The radio access network 110 is operatively connected to a core network 120. The core network 120 is in turn operatively connected to a service network 130, such as the Internet. The UEs 200a, 200b are thereby enabled to access services of the service network 130 and to exchange data with the service network 130. The operations of accessing services and exchanging data are performed via the radio access network node 140. The radio access network node 140 comprises, is collocated with, is integrated with, or is in operational communications with, a Transmit and Receive Point (TRP). The radio access network node 140 (via its TRP) and the UEs 200a, 200b are configured to communicate with each other over access links 150a, 150b. In this respect, UE 200b might be out of coverage of the radio access network node 140, as illustrated by access link 150b being drawn with a dotted line. Further, the UEs 200a, 200b are configured to communicate with each other over a sidelink 160.

Examples of radio access network nodes 140 are radio base stations, base transceiver stations, Node Bs (NBs), evolved Node Bs (eNBs), gNBs, access points, access nodes, and backhaul nodes. Examples of UEs 200a, 200b are wireless devices, mobile stations, mobile phones, handsets, wireless local loop phones, smartphones, laptop computers, tablet computers, network equipped sensors, network equipped vehicles, and so-called Internet of Things devices. In some embodiments, the UEs 200a, 200b are part of, collocated with, or integrated with, a respective vehicle.

Hereinafter, UE 200a will be denoted a first UE and UE 200b will be denoted a second UE. However, this does not necessarily imply that there is any hierarchical relation between these UEs 200a, 200b or any other UEs. Likewise, UE 200b might take the role of first UE and UE 200a might take the role of second UE.

As noted above there is still a need for an improved control of the sidelink transmission power. In some scenarios it could be beneficial to control the sidelink transmission power also based on other parameters than those included in the expression for the sidelink transmission power $P_{SL}$ referred. With respect to the above expression for the sidelink transmission power $P_{SL}$, aspects of the current situation in which the sidelink transmission is about to occur, which define the transmission context for the sidelink transmission, are not taken into consideration in this expression for the sidelink transmission power.

In more detail, in a typical scenario, the first UE 200a might transmit a message in the sidelink 160 using maximum transmission power $P_{MAX}$ (by the first UE 200a having received DCI5 with TPC command set to "0") to ensure that all intended responders (such as the second UE 200b) receive the transmission. This could be considered as acceptable in case the transmission is due to an emergency situation. In other situations the transmission power will, from the perspective of the first UE 200a, only consider the pathloss to the radio access network node 140, as represented by the term $PL_{SL}$ (by the first UE 200a having received DCI5 with TPC command set to "1").

Considering a scenario e.g. with a first vehicle (as equipped with the first UE 200a) approaching a road intersection with a potential collision emerging, it could be beneficial if the vehicle could contact, by means of transmitting a message on the sidelink 160, other vehicles (as equipped with the second UE 200b) that are in the vicinity of the first vehicle are also approaching the same intersection. However, at the same time, the first vehicle does not need to contact those vehicles that are farther away and/or are not approaching the intersection. This requires the transmission power of the sidelink 160 to be correctly controlled. However, such control of the transmission power is not possible by only considering the pathloss to the radio access network node 140 since the pathloss to the radio access network node 140 generally neither represents the distance between the first vehicle and the intersection, nor the speed at which the first vehicle is approaching the intersection, unless the radio access network node 140 is placed directly at the intersection (which normally cannot be assumed).

The embodiments disclosed herein therefore relate to mechanisms for context-triggered power control of a sidelink 160 between a first UE 200a and a second UE 200b. In order to obtain such mechanisms there is provided a first UE 200a, a method performed by the first UE 200a, a computer program product comprising code, for example in the form of a computer program, that when run on a first UE 200a, causes the first UE 200a to perform the method.

At least some of the herein disclosed embodiments are based on adapting sidelink transmission power to the current situation considered for the sidelink transmission. Information accessible to the first UE 200a of the current situation, with what expected purpose the sidelink transmission is initiated, what application triggered the sidelink transmission, etc., can be used by the first UE 200a when selecting the transmission power of the sidelink 160. The first UE 200 can thereby ensure that the sidelink transmissions will reach a response-area reflecting the transmission purpose.

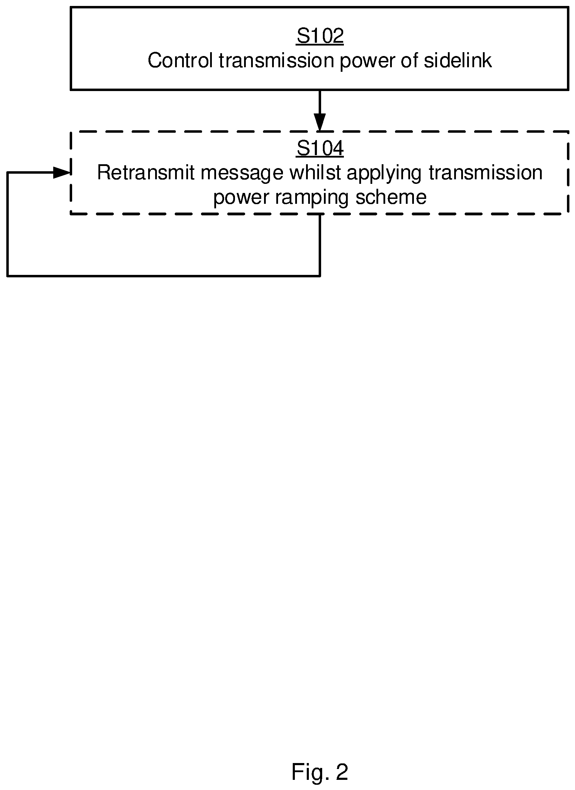

**Fig. 2** is a flowchart illustrating embodiments of methods for context-triggered power control of a sidelink 160 between a first UE 200a and a second UE 200b. The methods are performed by the first UE 200a. The methods are advantageously provided as computer programs 620.

The transmission power of the sidelink 160 is selected according to the transmission context. In particular, the first UE 200a is configured to perform action S102:

S102: The first UE 200a controls transmission power of the sidelink 160 depending on the transmission context in which the transmission on the sidelink 160 is triggered.

Examples of such transmission contexts and current situations in which the sidelink transmission is about to occur will be provided below.

Embodiments relating to further details of context-triggered power control of a sidelink 160 between a first UE 200a and a second UE 200b as performed by the first UE 200a will now be disclosed.

In some embodiments, it is assumed that the intended receiver, defined by the second UE 200b, receives the transmission on the sidelink 160. However, in other embodiments, the second UE 200b does not receive the transmission on the sidelink 160. There could be different ways for the first UE 200a to handle the latter. Different embodiments relating thereto will now be described in turn.

According to the invention, when the first UE 200a does not receive any response from the second UE 200b that would indicate that the second UE 200b has received the transmission on the sidelink 160, the first UE 200a ramps up the transmission power for further transmissions of the same message on the sidelink 160, e.g. for one or more retransmissions. In particular, in absence of response to transmission of a message on the sidelink 160 within a predetermined time period, the first UE 200a is configured to perform (optional) action S104:
S104: The first UE 200a retransmits the message on the sidelink 160 whilst applying a transmission power ramping scheme. According to the transmission power ramping scheme, transmission power for retransmitting the message is controlled to be increased from retransmission to retransmission of the message.

In Fig. 2 this is illustrated by the feedback loop from action S104 to itself.

The proposed power ramping scheme enables for the first UE 200a to approach from a transmission power perspective the connection establishment from a more conservative starting point. The first UE 200a thereby is enabled to start using a comparatively low transmission power level and then increase the transmission power gradually according to the power ramping scheme in absence of a response from the second UE 200b.

According to the invention, power ramping scheme parameters are selected according to the transmission context. That is, in some embodiments, at least one of how much and how fast to increase the transmission power from retransmission to retransmission depends on the transmission context.

In this respect, the predetermined time period might either take a fixed value or depend on the transmission context, such that the predetermined time period is shorter for a transmission context that indicates a high degree of urgency than for a transmission context that indicates a low degree of urgency.

Further in this respect, the number of retransmissions might either be fixed or depend on the transmission context, such that the number of retransmissions is higher for a transmission context that indicates a high degree of urgency than for a transmission context that indicates a low degree of urgency.

Further in this respect, the increase in transmission power from one retransmission to the next might dependent on the sequence number of the retransmission attempt. That is, in some embodiments, at least one of how much and how fast to increase the transmission power from retransmission to retransmission depends on how many retransmissions of the message have been made.

Reference is here made to **Fig. 3** that schematically illustrates three examples of transmission power ramping schemes (a), (b), (c). In Fig. 3 is illustrated how the transmission power increases with time at different rates for the different transmission power ramping schemes (a), (b), (c). Taking transmission power ramping scheme (a) as an example, for the first transmission (i.e., retransmission zero) the transmission power value 2.5 is used. Then, after 2.5 time units, the transmission power is increased to transmission power value 4, and so on. Thus, if a retransmission is to occur in a point in time between the time value 0 and the time value 2.5, then the transmission power is set according to transmission power value 2.5, and so on. In this respect, transmission power ramping scheme (a) represents a moderate increase in transmission power whereas transmission power ramping scheme (c) represents a most aggressive increase in transmission power and transmission power ramping scheme (b) represents a most relaxed increase in transmission power. As the skilled person understands, these are just three examples of transmission power ramping schemes and other ones are equally possible.

The proposed power ramping scheme might mathematically be expressed as follows:

$$P_{SL,k+1} = P_{SL,k} + \Delta P(f(\text{"transmission context"}, k + 1).$$

In this expression, $P_{SL,k}$ is the transmission power used for (re)transmission attempt $k \geq 1$, and thus $P_{SL,k+1}$ is the transmission power used for the next retransmission, i.e., for retransmission attempt $k + 1$. Further, $\Delta P$ is the increase in power, where the increase in power is defined by a function $f$ of the transmission context and the sequence number, given by retransmission attempt number $k + 1$.

In some embodiments, the power ramping scheme is adaptively adjusted as the transmission context is updated. That is, in some embodiments, when the transmission context is updated, the transmission power ramping scheme is adjusted according to the updated transmission context. This means that as the transmission context is updated, the increase in transmission power is either adjusted to be more aggressive (e.g., such that the increase in transmission power from one retransmission to the next is higher than it was before adjustment of the transmission power ramping scheme) or less aggressive (e.g., such that the increase in transmission power from one retransmission to the next is lower than it was before adjustment of the transmission power ramping scheme).

At a first stage the first UE 200a is using a first transmission power ramping scheme (say, transmission power ramping scheme (a) of Fig. 3) for retransmission of a message according to a first transmission context. At a second stage, the first UE 200a identifies that the transmission context has changed to a second transmission context. At a third stage, if no response has been received for the message, then the retransmission of the message is continued, but using a second transmission power ramping scheme (say, transmission power ramping scheme (b) or (c) of Fig. 3) that is selected according to the second transmission context. In a first example the transmission power is not reduced from one retransmission to the next, even if the transmission context changes. Thus, in Fig. 3, assume that transmission power ramping scheme (a) is used and that the transmission context changes such that a new transmission power ramping scheme is to be used starting at time value 6. Then, at time value 6, the transmission power will either stay at power value 3 (if transmission power ramping scheme (b) is used) or be increased to power value 7.5 (transmission power ramping scheme (c) is used). In a second example, the transmission power is allowed to be reduced from one retransmission to the next if the transmission context changes. Thus, in Fig. 3, assume again that transmission power ramping scheme (a) is used and that the transmission context changes such that a new transmission power ramping scheme is to be used starting at time value 6. Then, at time value 6, the transmission power will either be lowered to power value 3 (if transmission power ramping scheme (b) is used) or be increased to power value 7.5 (transmission power ramping scheme (c) is used).

In general terms, the transmission on the sidelink 160 involves transmission of one or more messages. Each message might comprise data (such as PSSCH signalling, where PSSCH is short for physical sidelink shared channel) or control information (such as PSCCH signalling, where PSCCH is short for physical sidelink control channel). In addition to the data or control information, the message might comprise additional information, such as cause-related information. Such information might be considered by the second UE 200b in its potential future response to the message as transmitted by the first UE 200a.

In some embodiments, the message comprises information of what caused the sidelink transmission. That is, in some embodiments, a message transmitted on the sidelink 160, when the transmission power is controlled, comprises information indicative of the transmission context. For example, information indicative of the transmission context might be given in a text format and specify that the message is of type "critical", "length-critical", "time-critical", "time/length-critical", "moderate", or "casual", etc. For example, information indicative of the transmission context might be given in terms of numerical values defining one or more of: intended distance of sidelink transmission, time scale (i.e., time criticalness) of sidelink transmission, etc. Thus, in preferred embodiments the transmission context may be represented by a value wherein said value encodes at least one transmission condition. Preferably, said value is from a set of values and each value in said set is for encoding at least one transmission condition. Said value may be a numerical value or a descriptive value. A transmission condition may be a condition that triggers a sidelink transmission and/or a condition in which the transmission occurs (e.g. related to propagation of radio signals). For example, in heavy rain propagation conditions will be different than on a sunny day and that this may require different power ramping scheme to be applied.

In some embodiments, the message comprises a sequence number. That is, in some embodiments, when the message is retransmitted on the sidelink 160, the message comprises an indicator of how many times the message has been retransmitted.

In some embodiments, the message comprises transmission power information. That is, in some embodiments, the message comprises information of the transmission power level used for transmitting the message.

With this information, the second UE 200b may adjust parameters of any future response to the message so that e.g. a constraint in distance and/or time scale can be met. A constraint in distance may define which transmission power to be used for transmission on the sidelink 160, and possibly which transmission power ramping scheme to use, whereas a constraint in time scale may define when a response to the message needs to be transmitted on the sidelink 160 and possibly which transmission power ramping scheme to use. In some embodiments, the message comprises a combination of two or more of the above disclosed examples of information.

As disclosed above, the first UE 200a in S102 controls transmission power of the sidelink 160 depending on the transmission context in which the transmission on the sidelink 160 is triggered. In this respect there could thus be different examples of transmission contexts. Embodiments related thereto will now be disclosed.

In some embodiments, the sidelink transmission is trigged by an application run in the first UE 200a and this application defines the transmission context. That is, in some embodiments, the transmission context may be indicative of an application in the first UE 200a triggered the sidelink transmission.

In some embodiments, the sidelink transmission is associated with an indication of how urgent transmission of the sidelink transmission is and this indication defines the transmission context. That is, in some embodiments, the transmission context may be indicative of time-critical characteristics of the sidelink transmission.

In some embodiments, the sidelink transmission is to reach any UE located at a certain target location (such as a street crossing) from the first UE 200a and the distance to this target location defines the transmission context. That is, in some embodiments, the transmission context may be indicative of a distance between the first UE 200a and a target location of the sidelink transmission.

In some embodiments, the sidelink transmission is to reach any UE located at a certain distance from the first UE 200a and this distance defines the transmission context. That is, in some embodiments, the transmission context may be indicative of a relative distance between the first UE 200a and the second UE 200b.

In some embodiments, the sidelink transmission is performed whilst the UE 200a is travelling at a certain speed and this speed defines the transmission context. That is, in some embodiments, the transmission context may be indicative of an absolute speed of the first UE 200a.

In some embodiments, the sidelink transmission is to reach another UE that is also travelling at a certain speed, which might be same or different from the speed of the first UE 200a. Hence, in some embodiments the first UE 200a and the second UE 200b are travelling with a relative speed with respect to each other that defines the transmission context. That is, in some embodiments, the transmission context may be indicative of the relative speed between the first UE 200a and the second UE 200b.

In some embodiments, the transmission context may be indicative of a combination of two or more of the aforementioned embodiments. In particular, in some embodiments, the transmission context may be indicative of a combination of relative distance between the first UE 200a and the second UE 200b and relative speed between the first UE 200a and the second UE 200b.

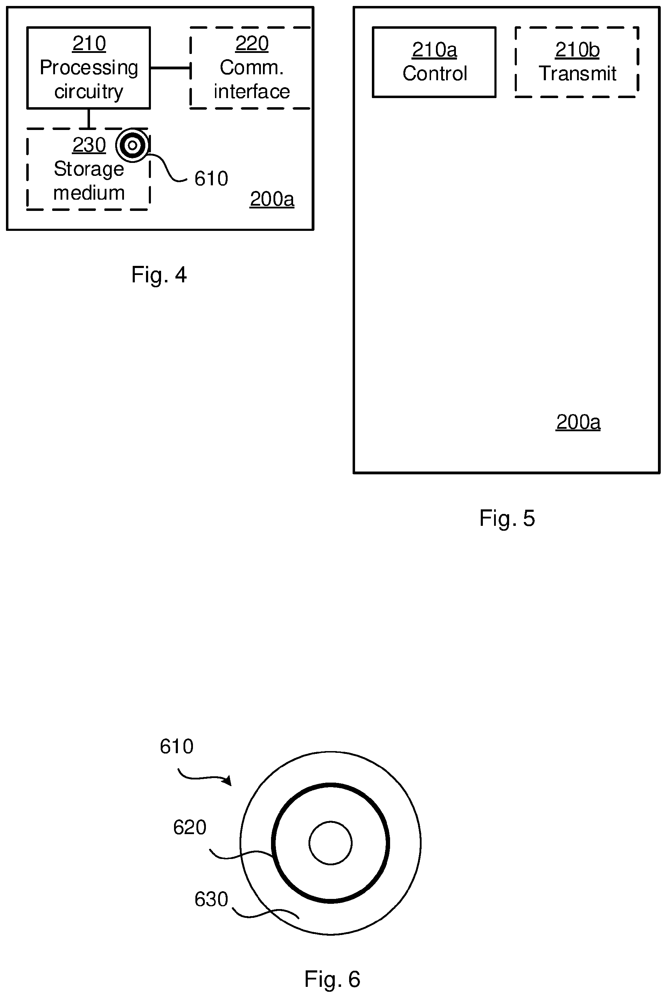

**Fig. 4** schematically illustrates, in terms of a number of functional units, the components of a UE 200a according to an embodiment. Processing circuitry 210 is provided using any combination of one or more of a suitable central processing unit (CPU), multiprocessor, microcontroller, digital signal processor (DSP), etc., capable of executing software instructions stored in a computer program product 610 (as in Fig. 6), e.g. in the form of a storage medium 230. The processing circuitry 210 may further be provided as at least one application specific integrated circuit (ASIC), or field programmable gate array (FPGA).

Particularly, the processing circuitry 210 is configured to cause the UE 200a to perform a set of operations, or actions, as disclosed above. For example, the storage medium 230 may store the set of operations, and the processing circuitry 210 may be configured to retrieve the set of operations from the storage medium 230 to cause the UE 200a to perform the set of operations. The set of operations may be provided as a set of executable instructions.

Thus the processing circuitry 210 is thereby arranged to execute methods as herein disclosed. The storage medium 230 may also comprise persistent storage, which, for example, can be any single one or combination of magnetic memory, optical memory, solid state memory or even remotely mounted memory. The UE 200a may further comprise a communications interface 220 at least configured for communications with the radio access network node 140 over an access link 150a, 150a' and another UE 200b over a sidelink 160. As such the communications interface 220 may comprise one or more transmitters and receivers, comprising analogue and digital components. The processing circuitry 210 controls the general operation of the UE 200a e.g. by sending data and control signals to the communications interface 220 and the storage medium 230, by receiving data and reports from the communications interface 220, and by retrieving data and instructions from the storage medium 230. Other components, as well as the related functionality, of the UE 200a are omitted in order not to obscure the concepts presented herein.

**Fig. 5** schematically illustrates, in terms of a number of functional modules, the components of a UE 200a according to an embodiment. The UE 200a of Fig. 5 comprises a control module 210a configured to perform action S102. The UE 200a of Fig. 5 may further comprise a number of optional functional modules, such a transmit module 210b configured to perform action S104. In general terms, each functional module 210a-210b may in one embodiment be implemented only in hardware and in another embodiment with the help of software, i.e., the latter embodiment having computer program instructions stored on the storage medium 230 which when run on the processing circuitry makes the UE 200a perform the corresponding actions mentioned above in conjunction with Fig 5. It should also be mentioned that even though the modules correspond to parts of a computer program, they do not need to be separate modules therein, but the way in which they are implemented in software is dependent on the programming language used. Preferably, one or more or all functional modules 210a-210b may be implemented by the processing circuitry 210, possibly in cooperation with the communications interface 220 and/or the storage medium 230. The processing circuitry 210 may thus be configured to from the storage medium 230 fetch instructions as provided by a functional module 210a-210b and to execute these instructions, thereby performing any actions as disclosed herein.

The UE 200a may be provided as a standalone device or as a part of at least one further device. Examples of different types of UEs have been provided above. For example, as also disclosed above, the UE 200a might be part of, collocated with, or integrated with, a vehicle.

A first portion of the instructions performed by the UE 200a may be executed in a first device, and a second portion of the of the instructions performed by the UE 200a may be executed in a second device; the herein disclosed embodiments are not limited to any particular number of devices on which the instructions performed by the UE 200a may be executed. Hence, the methods according to the herein disclosed embodiments are suitable to be performed by a UE 200a residing in a cloud computational environment. Therefore, although a single processing circuitry 210 is illustrated in Fig. 4 the processing circuitry 210 may be distributed among a plurality of devices, or nodes. The same applies to the functional modules 210a-210b of Fig. 5 and the computer program 620 of Fig. 6.

**Fig. 6** shows one example of a computer program product 610 comprising computer readable storage medium 630. On this computer readable storage medium 630, a computer program 620 can be stored, which computer program 620 can cause the processing circuitry 210 and thereto operatively coupled entities and devices, such as the communications interface 220 and the storage medium 230, to execute methods according to embodiments described herein. The computer program 620 and/or computer program product 610 may thus provide means for performing any actions as herein disclosed.

In the example of Fig. 6, the computer program product 610 is illustrated as an optical disc, such as a CD (compact disc) or a DVD (digital versatile disc) or a Blu-Ray disc. The computer program product 610 could also be embodied as a memory, such as a random access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory. Thus, while the computer program 620 is here schematically shown as a track on the depicted optical disk, the computer program 620 can be stored in any way which is suitable for the computer program product 610.

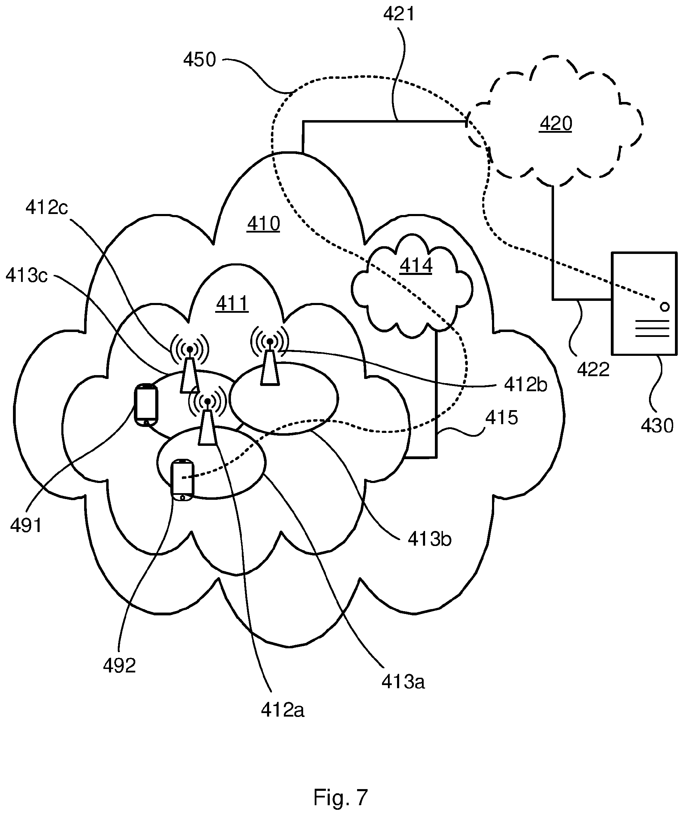

**Fig. 7** is a schematic diagram illustrating a telecommunication network connected via an intermediate network 420 to a host computer 430 in accordance with some embodiments. In accordance with an embodiment, a communication system includes telecommunication network 410, such as a 3GPP-type cellular network, which comprises access network 411, such as radio access network 110 in Fig. 1, and core network 414, such as core network 120 in Fig. 1. Access network 411 comprises a plurality of radio access network nodes 412a, 412b, 412c, such as NBs, eNBs, gNBs (each corresponding to the radio access network node 140 of Fig. 1) or other types of wireless access points, each defining a corresponding coverage area, or cell, 413a, 413b, 413c. Each radio access network nodes 412a, 412b, 412c is connectable to core network 414 over a wired or wireless connection 415. A first UE 491 located in coverage area 413c is configured to wirelessly connect to, or be paged by, the corresponding network node 412c. A second UE 492 in coverage area 413a is wirelessly connectable to the corresponding network node 412a. While a plurality of UE 491, 492 are illustrated in this example, the disclosed embodiments are equally applicable to a situation where a sole UE is in the coverage area or where a sole terminal device is connecting to the corresponding network node 412. The UEs 491, 492 correspond to the UEs 200a, 200b of Fig. 1.

Telecommunication network 410 is itself connected to host computer 430, which may be embodied in the hardware and/or software of a standalone server, a cloud-implemented server, a distributed server or as processing resources in a server farm. Host computer 430 may be under the ownership or control of a service provider, or may be operated by the service provider or on behalf of the service provider. Connections 421 and 422 between telecommunication network 410 and host computer 430 may extend directly from core network 414 to host computer 430 or may go via an optional intermediate network 420. Intermediate network 420 may be one of, or a combination of more than one of, a public, private or hosted network; intermediate network 420, if any, may be a backbone network or the Internet; in particular, intermediate network 420 may comprise two or more sub-networks (not shown).

The communication system of Fig. 7 as a whole enables connectivity between the connected UEs 491, 492 and host computer 430. The connectivity may be described as an over-the-top (OTT) connection 450. Host computer 430 and the connected UEs 491, 492 are configured to communicate data and/or signalling via OTT connection 450, using access network 411, core network 414, any intermediate network 420 and possible further infrastructure (not shown) as intermediaries. OTT connection 450 may be transparent in the sense that the participating communication devices through which OTT connection 450 passes are unaware of routing of uplink and downlink communications. For example, network node 412 may not or need not be informed about the past routing of an incoming downlink communication with data originating from host computer 430 to be forwarded (e.g., handed over) to a connected UE 491. Similarly, network node 412 need not be aware of the future routing of an outgoing uplink communication originating from the UE 491 towards the host computer 430.

In one embodiment an OTTa service related to motorway traffic control may use sidelink communication between vehicles on a motorway. Other OTT services using OTT communication can also be envisaged.

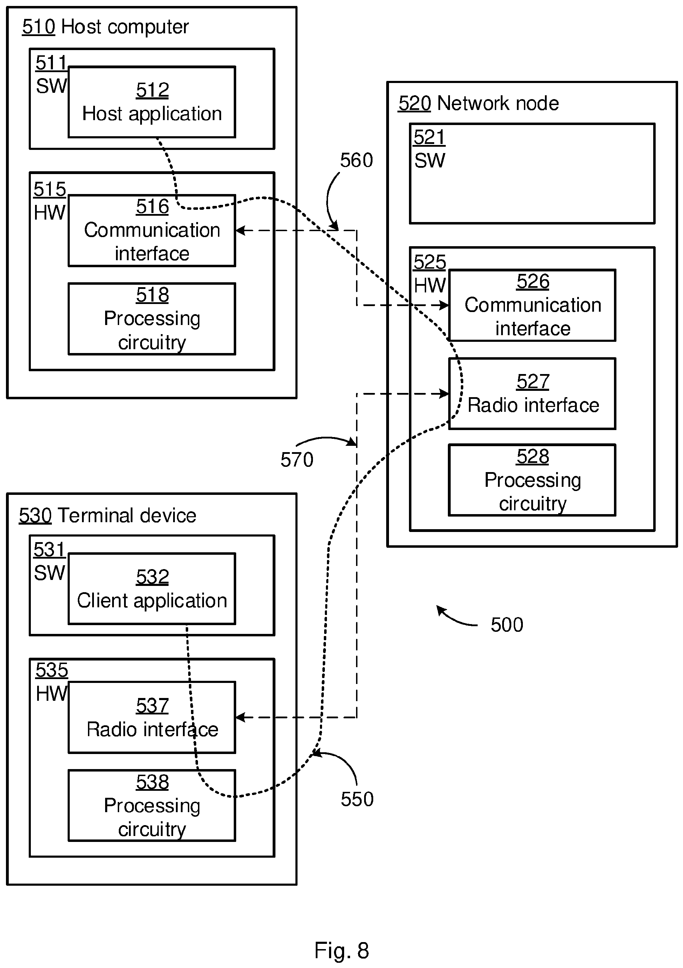

**Fig. 8** is a schematic diagram illustrating host computer communicating via a radio access network node with a UE over a partially wireless connection in accordance with some embodiments. Example implementations, in accordance with an embodiment, of the UE, radio access network node and host computer discussed in the preceding paragraphs will now be described with reference to Fig. 8. In communication system 500, host computer 510 comprises hardware 515 including communication interface 516 configured to set up and maintain a wired or wireless connection with an interface of a different communication device of communication system 500. Host computer 510 further comprises processing circuitry 518, which may have storage and/or processing capabilities. In particular, processing circuitry 518 may comprise one or more programmable processors, application-specific integrated circuits, field programmable gate arrays or combinations of these (not shown) adapted to execute instructions. Host computer 510 further comprises software 511, which is stored in or accessible by host computer 510 and executable by processing circuitry 518. Software 511 includes host application 512. Host application 512 may be operable to provide a service to a remote user, such as UE 530 connecting via OTT connection 550 terminating at UE 530 and host computer 510. The UE 530 corresponds to the UEs 200a, 200b of Fig. 1. In providing the service to the remote user, host application 512 may provide user data which is transmitted using OTT connection 550.

Communication system 500 further includes radio access network node 520 provided in a telecommunication system and comprising hardware 525 enabling it to communicate with host computer 510 and with UE 530. The radio access network node 520 corresponds to the radio access network node 140 of Fig. 1. Hardware 525 may include communication interface 526 for setting up and maintaining a wired or wireless connection with an interface of a different communication device of communication system 500, as well as radio interface 527 for setting up and maintaining at least wireless connection 570 with UE 530 located in a coverage area (not shown in Fig. 8) served by radio access network node 520. Communication interface 526 may be configured to facilitate connection 560 to host computer 510. Connection 560 may be direct or it may pass through a core network (not shown in Fig. 8) of the telecommunication system and/or through one or more intermediate networks outside the telecommunication system. In the embodiment shown, hardware 525 of radio access network node 520 further includes processing circuitry 528, which may comprise one or more programmable processors, application-specific integrated circuits, field programmable gate arrays or combinations of these (not shown) adapted to execute instructions. Radio access network node 520 further has software 521 stored internally or accessible via an external connection.

Communication system 500 further includes UE 530 already referred to. Its hardware 535 may include radio interface 537 configured to set up and maintain wireless connection 570 with a radio access network node serving a coverage area in which UE 530 is currently located. Hardware 535 of UE 530 further includes processing circuitry 538, which may comprise one or more programmable processors, application-specific integrated circuits, field programmable gate arrays or combinations of these (not shown) adapted to execute instructions. UE 530 further comprises software 531, which is stored in or accessible by UE 530 and executable by processing circuitry 538. Software 531 includes client application 532. Client application 532 may be operable to provide a service to a human or non-human user via UE 530, with the support of host computer 510. In host computer 510, an executing host application 512 may communicate with the executing client application 532 via OTT connection 550 terminating at UE 530 and host computer 510. In providing the service to the user, client application 532 may receive request data from host application 512 and provide user data in response to the request data. OTT connection 550 may transfer both the request data and the user data. Client application 532 may interact with the user to generate the user data that it provides.

It is noted that host computer 510, radio access network node 520 and UE 530 illustrated in Fig. 8 may be similar or identical to host computer 430, one of network nodes 412a, 412b, 412c and one of UEs 491, 492 of Fig. 7, respectively. This is to say, the inner workings of these entities may be as shown in Fig. 8 and independently, the surrounding network topology may be that of Fig. 7.

In Fig. 8, OTT connection 550 has been drawn abstractly to illustrate the communication between host computer 510 and UE 530 via network node 520, without explicit reference to any intermediary devices and the precise routing of messages via these devices. Network infrastructure may determine the routing, which it may be configured to hide from UE 530 or from the service provider operating host computer 510, or both. While OTT connection 550 is active, the network infrastructure may further take decisions by which it dynamically changes the routing (e.g., on the basis of load balancing consideration or reconfiguration of the network).

Wireless connection 570 between UE 530 and radio access network node 520 is in accordance with the teachings of the embodiments described throughout this disclosure. One or more of the various embodiments improve the performance of OTT services provided to UE 530 using OTT connection 550, in which wireless connection 570 forms the last segment. More precisely, the teachings of these embodiments may reduce interference, due to improved classification ability of airborne UEs which can generate significant interference.

A measurement procedure may be provided for the purpose of monitoring data rate, latency and other factors on which the one or more embodiments improve. There may further be an optional network functionality for reconfiguring OTT connection 550 between host computer 510 and UE 530, in response to variations in the measurement results. The measurement procedure and/or the network functionality for reconfiguring OTT connection 550 may be implemented in software 511 and hardware 515 of host computer 510 or in software 531 and hardware 535 of UE 530, or both. In embodiments, sensors (not shown) may be deployed in or in association with communication devices through which OTT connection 550 passes; the sensors may participate in the measurement procedure by supplying values of the monitored quantities exemplified above, or supplying values of other physical quantities from which software 511, 531 may compute or estimate the monitored quantities. The reconfiguring of OTT connection 550 may include message format, retransmission settings, preferred routing etc.; the reconfiguring need not affect network node 520, and it may be unknown or imperceptible to radio access network node 520. Such procedures and functionalities may be known and practiced in the art. In certain embodiments, measurements may involve proprietary UE signalling facilitating host computer's 510 measurements of throughput, propagation times, latency and the like. The measurements may be implemented in that software 511 and 531 causes messages to be transmitted, in particular empty or 'dummy' messages, using OTT connection 550 while it monitors propagation times, errors etc.

The inventive concept has mainly been described above with reference to a few embodiments. However, as is readily appreciated by a person skilled in the art, other embodiments than the ones disclosed above are equally possible within the scope of the inventive concept, as defined by the appended patent claims.

**Claims**

1. A method for context-triggered power control of a sidelink (160) between a first user equipment, UE, (200a) and a second UE (200b), the method being performed by the first UE (200a), the method comprising:

   controlling (S102) transmission power of the sidelink (160) depending on transmission context, wherein the transmission context comprises aspects of the current situation in which a sidelink transmission between the first UE (200a) and the second UE (200b) is about to occur, and
   wherein, in absence of response to transmission of a message on the sidelink (160) within a predetermined time period, the method further comprises:
   retransmitting (S104) the message on the sidelink (160) whilst applying a transmission power ramping scheme, wherein, according to the transmission power ramping scheme, transmission power for retransmitting the message is controlled to be increased from retransmission to retransmission of the message, wherein parameters of the transmission power ramping scheme are selected by the first UE according to the transmission context.

2. The method according to claim 1, wherein at least one of how much and how fast to increase the transmission power from retransmission to retransmission depends on the transmission context.

3. The method according to claim 1 or 2, wherein at least one of how much and how fast to increase the transmission power from retransmission to retransmission depends on how many retransmissions of the message have been made.

4. The method according to claim 2 or 3, wherein the transmission power ramping scheme is adjusted according to an update of the transmission context.

5. The method according to any of the preceding claims, wherein a message transmitted on the sidelink (160) comprises information indicative of the transmission context.

6. The method according to any one of claims 2 to 6, wherein a message retransmitted on the sidelink (160) comprises an indicator of how many times the message has been retransmitted.

7. The method according to any of the preceding claims, wherein the transmission context is indicative of an application in the first UE (200a) that triggered the sidelink (160) transmission.

8. The method according to any of the preceding claims, wherein the transmission context indicates that the sidelink (160) transmission is time-critical.

9. The method according to any of the preceding claims, wherein the transmission context is indicative of a distance between the first UE (200a) and a target location of the sidelink (160) transmission.

10. The method according to any of the preceding claims, wherein the transmission context is indicative of a relative distance between the first UE (200a) and the second UE (200b).

11. The method according to any of the preceding claims, wherein the transmission context is indicative of an absolute speed of the first UE (200a).

12. The method according to any of the preceding claims, wherein the transmission context is indicative of a relative speed between the first UE (200a) and the second UE (200b).

13. A first user equipment, UE, (200a) for context-triggered power control of a sidelink (160) between the first UE (200a) and a second UE (200b), the first UE (200a) comprising processing circuitry (210) and a storage medium (230), the storage medium (230) containing instructions executable by the processing circuitry (210) such that the first UE (200a) is operative to:

   control transmission power of the sidelink (160) depending on transmission context, wherein the transmission context comprises aspects of the current situation in which a sidelink transmission between the first UE (200a) and the second UE (200b) is about to occur, and

wherein, in absence of response to transmission of a message on the sidelink (160) within a predetermined time period, the method further comprises:

retransmitting (S104) the message on the sidelink (160) whilst applying a transmission power ramping scheme, wherein, according to the transmission power ramping scheme, transmission power for retransmitting the message is controlled to be increased from retransmission to retransmission of the message, wherein the first UE is adapted to select the parameters of the transmission power ramping scheme according to the transmission context.

**14.** The first UE (200a) according to claim 13, further being configured to perform the method according to any of claims 2 to 12.


**Patentansprüche**

**1.** Verfahren zur kontextgesteuerten Leistungsregelung eines Sidelinks (160) zwischen einer ersten Benutzereinrichtung, UE, (200a) und einer zweiten UE (200b), wobei das Verfahren von der ersten UE (200a) durchgeführt wird, wobei das Verfahren Folgendes umfasst:

Regeln (S102) einer Sendeleistung des Sidelinks (160) in Abhängigkeit vom Übertragungskontext, wobei der Übertragungskontext Aspekte der aktuellen Situation umfasst, in der eine Sidelink-Übertragung zwischen der ersten UE (200a) und der zweiten UE (200b) stattfinden soll, und
wobei das Verfahren bei Ausbleiben einer Antwort auf die Übertragung einer Nachricht auf dem Sidelink (160) innerhalb eines vorbestimmten Zeitraums ferner Folgendes umfasst:
erneutes Senden (S104) der Nachricht auf dem Sidelink (160), während gleichzeitig ein Sendeleistungssteigerungsschema angewendet wird, wobei gemäß dem Sendeleistungssteigerungsschema Sendeleistung zum erneuten Senden der Nachricht so geregelt wird, dass sie von Neuübertragung zu Neuübertragung der Nachricht erhöht wird, wobei Parameter des Sendeleistungssteigerungsschemas von der ersten UE gemäß dem Übertragungskontext ausgewählt werden.

**2.** Verfahren nach Anspruch 1, wobei mindestens eines davon, um wie viel und wie schnell die Sendeleistung von Neuübertragung zu Neuübertragung erhöht werden soll, vom Übertragungskontext abhängt.

**3.** Verfahren nach Anspruch 1 oder 2, wobei mindestens eines davon, um wie viel und wie schnell die Sendeleistung von Neuübertragung zu Neuübertragung erhöht werden soll, davon abhängt, wie viele Neuübertragungen der Nachricht durchgeführt wurden.

**4.** Verfahren nach Anspruch 2 oder 3, wobei das Sendeleistungssteigerungsschema gemäß einer Aktualisierung des Übertragungskontexts angepasst wird.

**5.** Verfahren nach einem der vorhergehenden Ansprüche, wobei eine Nachricht, die auf dem Sidelink (160) gesendet wird, Informationen umfasst, die den Übertragungskontext angeben.

**6.** Verfahren nach einem der Ansprüche 2 bis 6, wobei eine Nachricht, die auf dem Sidelink (160) erneut gesendet wird, einen Indikator dessen umfasst, wie oft die Nachricht erneut gesendet wurde.

**7.** Verfahren nach einem der vorhergehenden Ansprüche, wobei der Übertragungskontext eine Anwendung in der ersten UE (200a) angibt, die die Übertragung auf dem Sidelink (160) ausgelöst hat.

**8.** Verfahren nach einem der vorhergehenden Ansprüche, wobei der Übertragungskontext angibt, dass die Übertragung auf dem Sidelink (160) zeitkritisch ist.

**9.** Verfahren nach einem der vorhergehenden Ansprüche, wobei der Übertragungskontext eine Distanz zwischen der ersten UE (200a) und einem Zielort der Übertragung auf dem Sidelink (160) angibt.

**10.** Verfahren nach einem der vorhergehenden Ansprüche, wobei der Übertragungskontext eine relative Distanz zwischen der ersten UE (200a) und der zweiten UE (200b) angibt.

**11.** Verfahren nach einem der vorhergehenden Ansprüche, wobei der Übertragungskontext eine absolute Geschwindigkeit der ersten UE (200a) angibt.

12. Verfahren nach einem der vorhergehenden Ansprüche, wobei der Übertragungskontext eine relative Geschwindigkeit zwischen der ersten UE (200a) und der zweiten UE (200b) angibt.

13. Erste Benutzereinrichtung, UE, (200a) zur kontextgesteuerten Leistungsregelung eines Sidelinks (160) zwischen der ersten UE (200a) und einer zweiten UE (200b), wobei die erste UE (200a) Verarbeitungsschaltungsanordnung (210) und ein Speichermedium (230) umfasst, wobei das Speichermedium (230) Anweisungen enthält, die von der Verarbeitungsschaltungsanordnung (210) ausgeführt werden können, so dass die erste UE (200a) zu Folgendem ausgelegt ist:

Regeln einer Sendeleistung des Sidelinks (160) in Abhängigkeit vom Übertragungskontext, wobei der Übertragungskontext Aspekte der aktuellen Situation umfasst, in der eine Sidelink-Übertragung zwischen der ersten UE (200a) und der zweiten UE (200b) stattfinden soll, und
wobei das Verfahren bei Ausbleiben einer Antwort auf die Übertragung einer Nachricht auf dem Sidelink (160) innerhalb eines vorbestimmten Zeitraums ferner Folgendes umfasst:
erneutes Senden (S104) der Nachricht auf dem Sidelink (160), während gleichzeitig ein Sendeleistungssteigerungsschema angewendet wird, wobei gemäß dem Sendeleistungssteigerungsschema Sendeleistung zum erneuten Senden der Nachricht so geregelt wird, dass sie von Neuübertragung zu Neuübertragung der Nachricht erhöht wird, wobei die erste UE dazu geeignet ist, die Parameter des Sendeleistungssteigerungsschemas von der ersten UE gemäß dem Übertragungskontext auszuwählen.

14. Erste UE (200a) nach Anspruch 13, die ferner dazu konfiguriert ist, das Verfahren nach einem der Ansprüche 2 bis 12 durchzuführen.

**Revendications**

1. Procédé de commande de puissance à déclenchement par contexte d'une liaison latérale (160) entre un premier équipement utilisateur, UE, (200a) et un deuxième UE (200b), le procédé étend réalisé par le premier UE (200a), le procédé comprenant :

la commande (S102) d'une puissance de transmission de la liaison latérale (160) en fonction d'un contexte de transmission, dans lequel le contexte de transmission comprend des aspects de la situation actuelle dans laquelle une transmission de liaison latérale entre le premier UE (200a) et le deuxième UE (200b) est sur le point de se dérouler, et
dans lequel, en l'absence de réponse à une transmission d'un message sur la liaison latérale (160) au cours d'une période de temps prédéterminée, le procédé comprend en outre :
la retransmission (S104) du message sur la liaison latérale (160) tout en appliquant un schéma de variation de puissance de transmission, dans lequel, selon le schéma de variation de puissance de transmission, une puissance de transmission pour retransmettre le message est commandée pour être augmentée d'une retransmission à une autre du message, dans lequel des paramètres du schéma de variation de puissance de transmission sont sélectionnés par le premier UE selon le contexte de transmission.

2. Procédé selon la revendication 1, dans lequel au moins l'une de la quantité et de la vitesse d'augmentation de la puissance de transmission d'une retransmission à une autre dépend du contexte de transmission.

3. Procédé selon la revendication 1 ou 2, dans lequel au moins l'une de la quantité et de la vitesse d'augmentation de la puissance de transmission d'une retransmission à une autre dépend du nombre de retransmissions du message qui ont été réalisées.

4. Procédé selon la revendication 2 ou 3, dans lequel le schéma de variation de puissance de transmission est ajusté selon une mise à jour du contexte de transmission.

5. Procédé selon l'une quelconque des revendications précédentes, dans lequel un message transmis sur la liaison latérale (160) comprend des informations indiquant le contexte de transmission.

6. Procédé selon l'une quelconque des revendications 2 à 6, dans lequel un message retransmis sur la liaison latérale (160) comprend un indicateur du nombre de fois que le message a été retransmis.

7. Procédé selon l'une quelconque des revendications précédentes, dans lequel le contexte de transmission indique une application dans le premier UE (200a) qui a déclenché la transmission de liaison latérale (160).

8. Procédé selon l'une quelconque des revendications précédentes, dans lequel le contexte de transmission indique que la transmission de liaison latérale (160) est critique en termes de temps.

9. Procédé selon l'une quelconque des revendications précédentes, dans lequel le contexte de transmission indique une distance entre le premier UE (200a) et un emplacement cible de la transmission de liaison latérale (160).

10. Procédé selon l'une quelconque des revendications précédentes, dans lequel le contexte de transmission indique une distance relative entre le premier UE (200a) et le deuxième UE (200b).

11. Procédé selon l'une quelconque des revendications précédentes, dans lequel le contexte de transmission indique une vitesse absolue du premier UE (200a).

12. Procédé selon l'une quelconque des revendications précédentes, dans lequel le contexte de transmission indique une vitesse relative entre le premier UE (200a) et le deuxième UE (200b).

13. Premier équipement utilisateur, UE, (200a) pour une commande de puissance à déclenchement par contexte d'une liaison latérale (160) entre le premier UE (200a) et un deuxième UE (200b), le premier UE (200a) comprenant une circuiterie de traitement (210) et un support de stockage (230), le support de stockage (230) contenant des instructions exécutables par la circuiterie de traitement (210) de sorte que le premier UE (200a) soit fonctionnel pour :

commander une puissance de transmission de la liaison latérale (160) en fonction d'un contexte de transmission, dans lequel le contexte de transmission comprend des aspects de la situation actuelle dans laquelle une transmission de liaison latérale entre le premier UE (200a) et le deuxième UE (200b) est sur le point de se dérouler, et

dans lequel, en l'absence de réponse à une transmission d'un message sur la liaison latérale (160) au cours d'une période de temps prédéterminée, le procédé comprend en outre :

la retransmission (S104) du message sur la liaison latérale (160) tout en appliquant un schéma de variation de puissance de transmission, dans lequel, selon le schéma de variation de puissance de transmission, une puissance de transmission pour retransmettre le message est commandée pour être augmentée d'une retransmission à une autre du message, dans lequel le premier UE est adapté pour sélectionner les paramètres du schéma de variation de puissance de transmission selon le contexte de transmission.

14. Premier UE (200a) selon la revendication 13, étant en outre configuré pour réaliser le procédé selon l'une quelconque des revendications 2 à 12.

100

140

110

150b

150a

200b

160

200a

120

130

Fig. 1

Power

8

7

6

5

4

3

2

0

(c)

(a)

(b)

0  1  2  3  4  5  6  7  8  9  10  11  12  Time

Fig. 3

Fig. 2

| 210 | | 220 |
| Processing circuitry | | Comm. interface |

230
Storage medium

610

200a

Fig. 4

| 210a | 210b |
| Control | Transmit |

200a

Fig. 5

610

620

630

Fig. 6

Fig. 7

510 Host computer

511 SW

512 Host application

515 HW

516 Communication interface

518 Processing circuitry

560

520 Network node

521 SW

525 HW

526 Communication interface

527 Radio interface

528 Processing circuitry

570

530 Terminal device

531 SW

532 Client application

535 HW

537 Radio interface

538 Processing circuitry

550

500

Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3349517 A1

**Non-patent literature cited in the description**

- **VIVO**. Support of unicast, groupcast and broadcast. *3GPP DRAFT; R1-1810388*